# EUROPÄISCHE PATENTANMELDUNG

(11) **EP 0 825 078 A1**
(43) Veröffentlichungstag der Anmeldung: **25.02.1998**
(21) Anmeldenummer: 97113927.4
(22) Anmeldetag: 13.08.1997
(51) Int. Cl.: B60S 1/38, B60S 1/52

(54) **Scheibenreinigungsvorrichtung für ein Kraftfahrzeug mit verbesserter Beheizung**

(30) Priorität: 14.08.1996 DE 19632751
(71) Anmelder: Burtz, Georg, 97318 Kitzingen (DE)
(72) Erfinder: Burtz, Georg, 97318 Kitzingen (DE)
(74) Vertreter: Lippert, Hans, Dipl.-Ing.

(57) **Zusammenfassung**

Eine Scheibenreinigungsvorrichtung für ein Kraftfahrzeug mit einem von einem Wischarm getragenen Wischblatt (10), das auf einer der Scheibe (30) zuwendbaren zwei voneinander beabstandete Wischkanten (11, 12) zum gleichzeitigen Anlegen an die Scheibe (30), einen parallel zu den Wischkanten geführten Längskanal (16) für ein Reinigungsfluid mit Austrittsöffnungen (19) zu einem von den beiden Wischkanten (11, 12) begrenzten Raum (100) und eine Heizeinrichtung (18) aufweist, zeichnet sich nach der Erfindung dadurch aus, daß die Austrittsöffnungen (19) in einem vom Profilgummi (13) des Wischblatts (10) getragenen Längsstreifen (18) vorgesehen sind, der zur Bildung der Heizeinrichtung aus elektrisch leitendem Material besteht. Dadurch wird bei Außentemperaturen unter dem Gefrierpunkt die Reinigungswirkung beträchtlich verbessert.

## Beschreibung

Die Erfindung betrifft eine Scheibenreinigungsvorrichtung für ein Kraftfahrzeug mit einem von einem Wischerarm getragenen Wischblatt, das auf einer der Scheibe zuwendbaren Seite zwei voneinander beabstandete Wischkanten zum gleichzeitigen Anlegen an die Scheibe, einen parallel zu den Wischkanten geführten Längskanal für ein Reinigungsfluid mit Austrittsöffnungen zu einem von den beiden Wischkanten begrenzten Raum und eine Heizeinrichtung aufweist.

Ein Wischblatt der oben beschriebenen Art ist im wesentlichen aus der DE 3841133A1 bekannt. Das dort beschriebene Scheibenwischerblatt hat einen profilförmigen Wischgummi, der in einem an eine zu reinigende Scheibe gepreßten Zustand mit wenigstens zwei voneinander beabstandeten Lippen an der Scheibenoberfläche anliegt, die zusammen mit einer konkaven Unterseite des Wischgummiprofils einen Hohlraum begrenzt. Das Wischgummiprofil weist einen Längskanal für ein Reinigungsfluid auf, das durch Öffnungen in den Hohlraum und auf die Scheibe gelangen kann. Ferner sind in das Wischgummiprofil Heizdrähte eingebettet, die zur Erwärmung des Wischblattes und damit auch zur indirekten Erwärmung des Fluids dienen.

Mit dieser bekannten Art der Reinigungsfluidzuführung über Austrittsöffnungen oder Austrittsdüsen in einen vom Wischgummiprofil und der Scheibe umschlossenen Hohlraum soll die beispielsweise als Reinigungsfluid benutzte Waschflüssigkeit gut ausgenützt werden. Bei gekrümmten Scheiben oder gekrümmten Scheibenbereichen kann diese angestrebte Ausnützung der Waschflüssigkeit jedoch mangels eines hinreichend hohen Anpreßdruckes der Lippen unzureichend sein. Nach der DE 3841133A1 hat man daher bereits vorgeschlagen, an den beiden Außenrändern des Wischgummiprofils jeweils zwei nebeneinander liegende Lippen vorzusehen, wobei die außen liegende Lippe aus einem elastischen verschleißfesten Material und die innen liegende Lippe aus einem weicheren Material besteht. Dieses mit vier Lippen an der Scheibe anliegende Profil hat jedoch einen relativ komplexen Aufbau. Darüberhinaus können bei strengerem Frost die mit nicht beheizten Wischblättern verbundenen Probleme auftauchen, da insbesondere im Hinblick auf eine vereiste Scheibe die Aufheizung des Wischblattes unzureichend ist.

Der Anpreßdruck eines Wischblattes an eine zu reinigende Fahrzeugscheibe erfolgt üblicherweise über ein Tragbügelgestell. Damit werden bei nicht gekrümmten Scheiben gute Reinigungsergebnisse infolge eines gleichmäßig verteilten Anpreßdrucks erzielt. Um eine bessere Anpassung des Wischblattes an eine Scheibenkrümmung zu erreichen, ist es aus der DE 3823001A1 bekannt, zur besseren Verteilung des Anpreßdrucks in das Wischblatt eine Federschiene einzulegen, die gegen ein Ende hin durch geschlossenrandige Langlöcher unterschiedlicher Länge und/oder unterschiedlichen Abstands voneinander geschwächt ist. Um innerhalb eines weiten Bereiches eine nahezu vom Federweg unabhängige Rückstellkraft zu erhalten, ist die Federschiene vorteilhafterweise aus einer superelastischen Nickel-Titan-Legierung hergestellt. Dieser bekannte Aufbau mit einem Tragbügelgestell, das im allgemeinen einen Hauptbügel, zwei Zwischenbügel und vier Krallenbügel aufweist, ist äußerst komplex und liefert bei Scheibenkrümmungen nur durch Einsatz zusätzlicher Mittel, wie einer unterschiedlich gelochten Federschiene, zu einem annehmbaren Ergebnis.

Um der bei einem derartigen Tragbügelgestell auftretenden Verringerung der Anpreßkraft im Mittelbereich eines Scheibenwischerblattes zu begegnen, ist es aus der DE 2304353A1 bekannt, im gesamten oder einem Teil des Scheibenwischerblattes einen Kanal vorzusehen, in welchem eine zugfeste Einlage angeordnet ist, die ein Spannen des Wischblattes in einer Richtung gestattet, die entgegengesetzt zur Krümmung der Scheibe verläuft. Die diesbezügliche Formgebung der zugfesten Einlage erfolgt über eine einstellbare Spannschraube.

Aus der DE 4411457A1 ist ein Scheibenwischer für Kraftfahrzeuge bekannt, bei dem zwischen einem Wischblatt und einem Scheibenwischerarm mehrere voneinander beabstandete Schraubenfedern vorgesehen sind, die für eine möglichst genaue Anpassung an die Kontur einer zu wischenden Scheibe sorgen sollen. Hierbei entfällt zwar das Tragbügelgestell, jedoch sind mehrere zu montierende Schraubenfedern vorzusehen.

Aus der deutschen Auslegeschrift 1052841 ist ein Scheibenwischer für Kraftfahrzeuge bekannt, der ebenfalls ein aufwendiges Tragbügelgestell aufweist, bei dem zum gleichmäßigeren Andrücken des Wischblattes an eine zu reinigende Scheibe zwischen den Bügeln Zugfedern vorgesehen sein können.

Aus der DE 3934203A1 ist ein Scheibenwischer für Kraftfahrzeuge mit einem Wischarm ohne die herkömmliche Tragbügelkonstruktion bekannt, der ein auf einer Scheibe aufliegendes Wischblatt direkt trägt. Oberhalb des Wischblattes ist ein aufblasbares Hohlrohr vorgesehen, das im aufgeblasenen Zustand das Wischblatt elastisch gegen die Scheibe drückt. Der offenbar durch seine Eigenelastizität gegen die Scheibe vorgespannte Wischerarm weist ein U-förmiges Profil auf, das in seiner Längserstreckung Einkerbungen hat, damit sich der Wischerarm auch gekrümmten Scheiben während seiner Bewegung anpassen kann. Es ist allerdings schwierig, in einem solchen eingekerbten Profilkörper eine geeignete Spannkraft zu realisieren.

Es besteht ein allgemeines Bedürfnis bei einer Scheibenreinigungsvorrichtung für Kraftfahrzeuge, den Anpreßdruck möglichst über die gesamte Länge eines Scheibenwischers so zu verteilen, daß bei der Bewegung über die zu reinigende Scheibe auch in gekrümmten Scheibenbereichen eine möglichst gute Anpassung an die Scheibe erzielt wird.

Aus der eingangs genannten DE 3841133A1 ist es darüberhinaus bekannt, nach Abnutzung der Lippen des Wischgummiprofils ein wirtschaftliches Austauschen dadurch zu ermöglichen, daß das Profil des Wischgummis in Längsrichtung zwei- oder mehrfach geteilt ist, wobei ein eine Lippe bildender Profillängsbereich des Wischgummis lösbar befestigt ist. Hierdurch braucht nur der Bereich des Wischgummiprofils gewechselt zu werden, der die an der Scheibe anliegende Lippe bildet. Dieser Austausch erfordert allerdings relativ aufwendige Gummiprofile, und der Austausch ist nicht einfach durchzuführen.

Aus der DE 3527528A1 ist ein Scheibenwischer mit einem Wischgummi bekannt, der ein Querschnittsprofil in Form eines gleichseitigen Dreiecks aufweist. An jeder Ecke des Dreieckprofils sind Wischerstege angeordnet, die in der Mitte in Längsrichtung geschlitzt sind. Während ein Wischersteg an einer Ecke des Dreieckprofils auf der Windschutzscheibe aufliegt, sind die beiden anderen Stege in durchgehenden Nuten einer Führungsschiene gehalten. Im Bedarfsfall läßt sich das Wischerblatt aus der durchgehenden Führungsschiene herausnehmen und darin wieder so einsetzen, daß ein ungebrauchter Wischersteg in die Betriebsstellung gelangt.

Es besteht ein allgemeines Bedürfnis, auch für ein Wischblatt mit zwei voneinander beabstandeten Wischkanten, die zum gleichzeitigen Anlegen an eine zu reinigende Scheibe gedacht sind, ein Wischblattprofil vorzusehen, das einen leichten und wirtschaftlich sinnvollen Austausch ermöglicht.

Ausgehend von der eingangs beschriebenen Scheibenreinigungsvorrichtung für ein Kraftfahrzeug und dem Stand der Technik nach der DE 3841133A1 liegt der Erfindung die Aufgabe zugrunde, trotz eines einfacheren und kostengünstigeren Aufbaus der Scheibenreinigungsvorrichtung die Reinigungswirkung zu verbessern, und zwar insbesondere auch bei unter dem Gefrierpunkt liegenden Außentemperaturen.

Diese Aufgabe wird bei einer Scheibenreinigungsvorrichtung für ein Kraftfahrzeug gemäß dem Oberbegriff des Anspruchs 1 dadurch gelöst, daß die in den Raum zwischen den beiden Wischkanten mündenden Austrittsöffnungen in einem vom Wischgummi getragenen Längsstreifen ausgebildet sind, der aus elektrisch leitendem Material besteht und deshalb gleichzeitig die Heizeinrichtung bildet und vom Profilgummi so getragen ist, daß er nicht in Berührung mit der Scheibe gelangt.

Gegenüber der bekannten Technik mit in den Wischgummi eingebetteten Drähten hat die vorgeschlagene Lösung den zusätzlichen Vorteil, daß durch die direkte Berührung des Reinigungsfluids mit dem direkt elektrisch geheizten Längsstreifen eine relativ hohe Temperaturerhöhung schnell verwirklicht werden kann.

Vorteilhafterweise begrenzt der Längsstreifen einen Teil des Raumes zwischen den beiden Wischkanten, so daß wenigstens ein Teil des beheizten Streifens der zu reinigenden Scheibe direkt und dicht gegenübersteht. Dies fördert die Befreiung der Scheibe von irgendwelchen Schnee- und Eisresten.

Vorteilhafterweise begrenzt der elektrisch heizbare Längsstreifen eine Längsseite des das Reinigungsfluid führenden Längskanals. Dadurch wird das bereits in den Längskanal einströmende Reinigungsfluid unmittelbar beheizt.

Gemäß einer besonders vorteilhaften Weiterbildung der Erfindung ist der Längsstreifen ein in Längsrichtung der Wischleiste verschiebbares flexibles Metallband, das mit seinem Außenende an der Wischleiste und an seinem Innenende über eine Zugfeder am Wischerarm befestigt ist. Dies ermöglicht in einfachster Weise eine Anpassung der Wischleiste an gekrümmte Scheiben oder gekrümmte Scheibenbereiche im Verlaufe der Hin- und Herbewegung des Scheibenwischers. Damit wird in Kombination mit den bereits oben erwähnten Funktionen des Längsstreifens die Reinigungswirkung bei gekrümmten Scheiben oder gekrümmten Scheibenbereichen beträchtlich gefördert, und zwar durch eine günstigere Verteilung des Anpreßdrucks. Gleichzeitig erhöht das Metallband die Stabilität des Wischblatts.

Dieser Aspekt der besseren Wischleistung bei gekrümmten Scheiben stellt allerdings auch eine selbständige Erfindung dar, da eine diesbezügliche Wirkung auch ohne Heizeinrichtung und ohne Reinigungsfluidzufuhr über das Wischblatt erzielt wird. Dementsprechend kann es sich bei dem Metallband auch um ein anderes langgestrecktes Bauelement handeln, das im Wischblatt verschiebbar vorgesehen, mit seinem einen Ende am Wischblatt selbst und mit seinem anderen Ende über die Zugfeder am Wischerarm angebracht ist. Die Funktion der Zugfeder kann auch im Bauelement integriert sein.

Vorteilhafterweise ist der Wischerarm an einer das Wischblatt übergreifenden Schale angelenkt. Diese Schale kann flexibel, jedoch in Querrichtung starr oder steif sein. Gemäß einer bevorzugten Weiterbildung ist die Schale aus mehreren gelenkig aneinandergereihten Gliedern gebildet, wobei vorzugsweise die Längenabmessung der Glieder in Richtung auf das Außenende des Wischblatts abnimmt. Dies fördert in Verbindung mit dem zugfedergespannten Wischblatt die Reinigungswirkung. Vorteilhafterweise sind die gelenkig aneinandergereihten Schalenglieder so ausgebildet, daß ausgehend von einer Geraden eine Krümmung nur in eine Richtung auf die Scheibe hin möglich ist. Eine solche nach Art eines Fingergelenkmechanismus ausgebildete Schale erhöht die Querstabilität des Wischblatts und erleichtert die Verschiebbarkeit des Metallbandes.

Gemäß einer weiteren bevorzugten Ausbildung der Erfindung sind mehrere Wischkantenpaare symmetrisch um den Umfang des Wischblatts verteilt vorgesehen, und zwar insbesondere drei Wischkantenpaare an einem Wischblatt, dessen Wischgummi im Querschnitt im wesentlichen die Form eines gleichseitigen Dreiecks mit nach innen gewölbten Seiten und abgestumpften Ecken hat, wobei die beiden Schnittpunkte zwischen jeweils einer nach innen gewölbten Dreiecksseite und den jeweils daran angrenzenden abgestumpften Ecken ein zugleich an der Scheibe anliegendes Wischkantenpaar definieren.

Diese Querschnittsform des Wischblatts stellt einen weiteren selbständigen Aspekt der Erfindung dar, da damit mit einem äußerst einfachen Aufbau ein einziges Wischblatt durch einfaches Verdrehen mehrfach mit jeweils unbenutzten Wischkantenpaaren verwendet werden kann. Diese Mehrfachnutzung ist unabhängig vom Vorhandensein einer Reinigungsfluidzufuhr und Heizungseinrichtung im Wischblatt. Das vorgeschlagene dreischenklige Querschnittsprofil hat den zusätzlichen Vorteil, daß der Fahrwind den Anpreßdruck des Wischblatts an der Scheibe fördert.

Vorteilhafterweise hat das mit mehreren Wischkantenpaaren versehene Querschnittsprofil eine entsprechend angepaßte Schale, die alle Wischkantenpaare mit Ausnahme des an der Scheibe anliegenden Wischkantenpaares übergreift.

Vorzugsweise sind die Schale und das Wischblatt derart ausgebildet, daß das Wischblatt leicht austauschbar bzw. nach entsprechender Verdrehung wieder einsetzbar ist.

Soll über das Wischblatt ein Reinigungsfluid zugeführt werden und soll darüberhinaus das Wischblatt beheizbar sein, sind vorteilhafterweise jedem Wischkantenpaar ein eigener Längskanal für das Reinigungsfluid und ein eigener Längsstreifen für die Austrittsöffnungen zugeordnet.

In Verbindung mit verschiedenen Weiterbildungen der Erfindung wird somit eine Scheibenreinigungsvorrichtung geschaffen, die gegenüber herkömmlichen, heute eingesetzten Scheibenreinigungsvorrichtungen eine dreifache Lebensdauer hat und bei einer gleichmäßigeren Wasserverteilung bei jeder Fahrgeschwindigkeit eine etwa doppelt so hohe Wischkraft entwickelt. Die Farbe der Wischblattschale und des Wischerarms können in einfachster Weise in der jeweiligen Wagenfarbe hergestellt werden.

Ein bevorzugtes Ausführungsbeispiel der Erfindung soll anhand von Zeichnungen näher erläutert werden. Es zeigt:
Fig. 1 einen Querschnitt durch das bevorzugte Ausführungsbeispiel der Erfindung und
Fig. 2 eine Seitenansicht des bevorzugten Ausführungsbeispiels bei Anlage an eine plane und eine gekrümmte Scheibe.

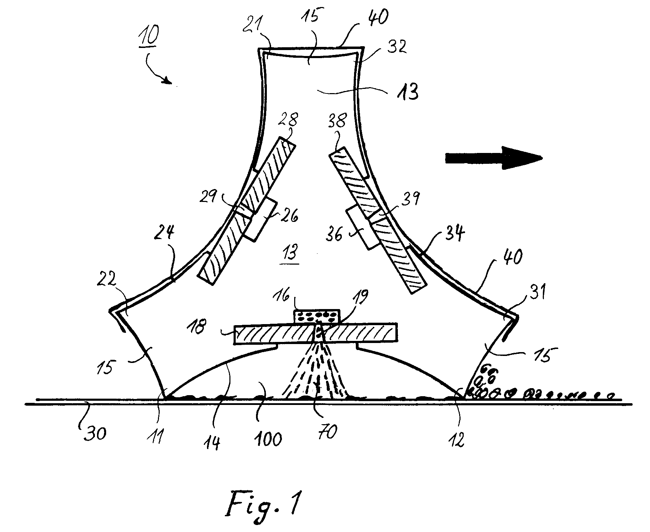

Ein in Fig. 1 im Querschnitt dargestelltes Wischblatt 10 weist einen entsprechend der Darstellung profilierten Wischgummi 13 auf. Am Wischgummi 13 sind drei Wischkantenpaare 11, 12; 21, 22; 31, 32 vorgesehen. Bei der gezeigten Darstellung sind die voneinander beabstandeten Wischkanten 11 und 12 im Einsatz zum Reinigen einer Scheibe 30. Hierbei wird das Wischblatt in Richtung des eingezeichneten Pfeils bewegt.

Der dargestellte Wischgummi 13 hat im Querschnitt die Form eines gleichseitigen Dreiecks mit nach innen gewölbten Seiten 14, 24, 34 und abgestumpften Ecken 15. Die abgestumpften Ecken 15 sind ebenfalls leicht nach innen gewölbt. Zwei zusammenwirkende Wischkanten, beispielsweise die Wischkanten 11 und 12, befinden sich jeweils beim Schnittpunkt einer gewölbten Dreiecksseite, wie beispielsweise 14, mit den angrenzenden abgestumpften Ecken 15. Hierbei ist der Abstand zwischen den zusammenwirkenden Kanten 11 und 12 beträchtlich größer als der Abstand zwischen nicht zusammenwirkenden Wischkanten, wie beispielsweise 11 und 22 oder 12 und 31.

Die jeweils an der Scheibe 30 anliegenden Wischkanten 11 und 12 begrenzen zusammen mit der zugehörigen gewölbten Dreiecksseite 14 und der Scheibe 30 einen Raum 100. In diesen Raum 100 kann ein gegen die Scheibe 30 gerichteter Strahl eines Reinigungsfluids 70 eingebracht werden. Die Zufuhr des Reinigungsfluids erfolgt über einen im Wischgummi 13 ausgebildeten Längskanal 16, der sich über die gesamten Länge des Wischgummis 13 parallel zu den Wischkanten erstreckt.

Der Längskanal 16 ist in der gezeigten Weise zum einen von der Umrandung einer Ausnehmung im Wischgummi 13 und zum anderen von einem in einer Ausnehmung des Wischgummis 13 eingesetzten Längsstreifen 18 begrenzt. Der Längsstreifen 18 weist zahlreiche über die Längserstreckung des Wischgummis verteilte Austrittsdüsen oder Austrittsöffnungen 19 für das Reinigungsfluid 70 auf.

Der Längsstreifen 18 hat gleichzeitig die Funktion einer elektrischen Heizeinrichtung und ist zu diesem Zweck aus einem elektrisch leitenden Werkstoff hergestellt. Die Anordnung ist so getroffen, daß der elektrisch beheizbare Längsstreifen 18 nicht nur das Reinigungsfluid im Längskanal 16 und in den Austrittsöffnungen 19 aufheizt, sondern auch Wärme gegen die Scheibe 30 strahlt und Wärme an den Raum 100 abgibt. Zu diesem Zweck ist ein relativ großer Bereich des Längsstreifens 18 vom Wischgummi 13 nicht abgedeckt, sondern liegt gegenüber der Scheibe 30 frei.

Gleichermaßen wie für das Wischkantenpaar 11, 12 sind für die Wischkantenpaare 21, 22 und 31, 32 jeweils ein Längskanal 26 bzw. 36 und ein Längsstreifen 28 bzw. 38 mit Austrittsöffnungen 29 bzw. 39 vorgesehen. Selbstverständlich wird lediglich dem Längskanal 16 der an der Scheibe 30 anliegenden Wischkanten 11 und 12 das Reinigungsfluid 70, beispielsweise eine Waschflüssigkeit, zugeführt. Dementsprechend ist auch lediglich der Längsstreifen 18 an eine elektrische Stromquelle angeschlossen.

Dazu sei noch bemerkt, daß der elektrische Rückleiter durch den jeweiligen Längskanal 16, 26 oder 36 geführt werden kann.

Aus Fig. 1 ist ferner ersichtlich, daß eine Schale 40 den Wischgummi 13 übergreift. Hierbei sind alle an der Scheibe 30 nicht anliegenden Wischkanten 21, 22, 31, 32 von der Schale 40 abgedeckt.

Ferner ist aus Fig. 1 ersichtlich, daß der Wischgummi 13 zusammen mit den darin eingebauten Längsstreifen 18, 28, 38 der Schale 40 entnommen und anschließend nach Drehung um 120° wieder in die Schale 40 eingesetzt werden kann, um ein noch nicht abgenutztes Wischkantenpaar zum Einsatz auf der zu reinigenden Scheibe 30 zu bringen.

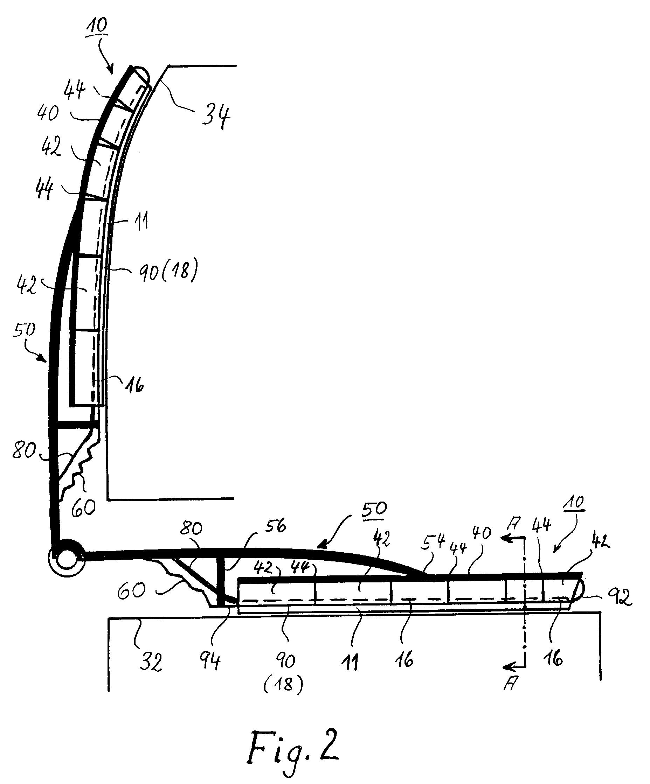

Fig. 2 zeigt in schematischer Darstellung das bevorzugte Ausführungsbeispiel der Erfindung in zwei unterschiedlichen Betriebszuständen, nämlich einmal bei Anlage auf einer planen Scheibe 32 und zum anderen auf einer gekrümmten Scheibe 34.

Das vereinfacht dargestellte Wischblatt 10 hat den in Fig. 1 gezeigten Querschnitt. Die Schale 40 weist eine Folge aneinandergereihter Schalenglieder 42 auf. Die Schalenglieder 42 sind so miteinander verbunden, daß die gesamte Schale 40 in Richtung auf eine Scheibe gekrümmt werden kann, wie es in Fig. 2 für die gekrümmte Scheibe 34 dargestellt ist. Eine Krümmung der Schale 40 in entgegengesetzter Richtung ist ausgehend von der planen Auflage auf der Scheibe 32 durch entsprechende konstruktive Mittel unterbunden. Da im allgemeinen die zu reinigenden Scheiben am Außenende der Wischleiste stärker gekrümmt sind, nimmt die Längenabmessung der Schalenglieder 42 in Richtung von innen nach außen zunehmend ab.

Ein Wischerarm 50, der beispielsweise in herkömmlicher Weise bei seinem Innenende mit einem Schwenkantrieb gekoppelt und mit Hilfe einer Zugfeder in Richtung auf die zu reinigende Scheibe 32 bzw. 34 gedrückt wird, um die erforderliche Anpreßkraft zwischen dem Wischblatt 10 und der Scheibe 32 bzw. 34 zu erzeugen, ist mit seinem Außenende an einem der mittleren Schalenglieder 42 der Schale 40 angebracht. Vorteilhafterweise geschieht diese Anbringung über ein an dieser Stelle vorgesehenes Gelenk 54.

Zum Anpassen der Schale 40 bzw. des in die Schale 40 eingesetzten Wischblatts 10 an eine gekrümmte Scheibe 34 ist der sich über die gesamte Länge des Wischblatts 10 erstreckende Längsstreifen 18 in Form eines darin in Längsrichtung verschiebbaren flexiblen Metallbandes 90 ausgebildet. Das Außenende 92 des Metallbandes ist mit dem äußeren Schalenglied 42 fest verbunden. Das Innenende 94 des flexiblen Metallbandes 90 ist über eine gespannte Zufgeder 60 mit einem hinteren Bereich des Wischerarmes 50 verbunden. Ein am Wischerarm 50 vorgesehener Steg 56 dient zur Führung des Innenendes 94 des Metallbandes in einer solchen Weise, daß es möglichst reibungslos im Wischblatt 10 läuft bzw. eine von der Zugfeder 60 erzeugte Querkraft auf das Metallband aufnimmt. Die Zugfeder 60 ist in einer solchen weise bemessen und vorgespannt, daß sich das Wischblatt 10 problemlos an eine gekrümmte Scheibe 34 anlegt.

Die elektrische Verbindung zum Beheizen des beispielsweise in Form eines Metallbandes 90 ausgebildeten Längsstreifens 18 ist in Fig. 2 nicht dargestellt. Der Fachmann weiß, wie er einen solchen Anschluß auszuführen hat. Demgegenüber ist die Zufuhr des Reinigungsfluids zum Längskanals 16 unter Verwendung eines Versorgungsschlauches 80 angedeutet. Dieser beispielsweise vom Waschwasserbehälter kommende Versorgungsschlauch nimmt vorzugsweise auch die Anschlußdrähte für die Heizeinrichtung auf. Die Anschlußdrähte können so bemessen sein, daß sie bereits als Heizdrähte wirken.

Der Wischerarm 50 ist vorzugsweise aus Metall hergestellt, wohingegen die Schale 40 bzw. die Schalenglieder 42 vorzugsweise aus Kunststoff bestehen. Der Wischgummi 13 besteht aus einem dafür üblichen elastischen Kunststoff. Im übrigen sind die gliederartige Schale 40 mit dem Wischgummi 13 und das darin geführte Metallband 90 mit der angekoppelten Zugfeder 60 dem Gelenkmechanismus eines Fingers mit Sehne und Muskel nachgebildet.

Die Darstellung nach Fig. 1 ist beispielsweise ein Schnitt längs der Linie A-A in Fig. 2.

Abschließend sei nochmals erwähnt, daß der Erfindung drei Aspekte zugrunde liegen, die bei dem betrachteten bevorzugten Ausführungsbeispiel in Kombination vorliegen und zu einem sich gegenseitig fördernden Ergebnis führen. Zum anderen können diese Aspekte aber auch unabhängig voneinander bei einer Scheibenreinigungsvorrichtung für ein Kraftfahrzeug angewendet werden. Diese Aspekte betreffen: erstens die Reinigungsfluidversorgung einschließlich der Beheizung, zweitens die Anpreßtechnik der Wischleiste an insbesondere gekrümmte Oberflächen und drittens die spezielle Querschnittsform der Wischleiste mit drei symmetrisch verteilten Wischkantenpaaren.

Ferner wird darauf hingewiesen, daß das oben beschriebene bevorzugte Ausführungsbeispiel nicht als Begrenzung des Erfindungsgedankens anzusehen ist, sondern daß vielmehr Veränderungen und Abwandlungen vom Fachmann leicht durchgeführt werden können, ohne den Grundgedanken und den Rahmen der Erfindung zu verlassen.

## Patentansprüche

1. Scheibenreinigungsvorrichtung für ein Kraftfahrzeug mit einem von einem Wischarm (50) getragenen Wischblatt (10), das auf einer der Scheibe (30) zuwendbaren Seite (14) zwei voneinander beabstandete Wischkanten (11, 12) zum gleichzeitigen Anlegen an die Scheibe (30), einen parallel zu den Wischkanten geführten Längskanal (16) für ein Reingungsfluid, einen vom Profilgummi (13) des Wischblatts (10) getragenen Längsstreifen (18) mit Austrittsöffnungen (19) für das Reingigungsfluid vom Längskanal (16) zu einem von den beiden Wischkanten (11, 12) begrenzten Raum (100), und eine Heizeinrichtung aufweist,
**dadurch gekennzeichnet**,
daß der Längsstreifen (18) zur Bildung der Heizeinrichtung aus elektrisch leitendem Material besteht und vom Profilgummi so getragen ist, daß er nicht in Berührung mit der Scheibe gelangt.

2. Scheibenreinigungsvorrichtung nach Anspruch 1,
**dadurch gekennzeichnet**,
daß der Längsstreifen (18) einen Teil des Raumes (100) zwischen den beiden Wischkanten (11, 12) und vorzugsweise eine Seite des Längskanals (16) begrenzt.

3. Scheibenreinigungsvorrichtung nach Anspruch 1 oder 2,
**dadurch gekennzeichnet**,
daß der Längsstreifen (18) ein in Längsrichtung des Wischblatts (10) verschiebbares flexibles Metallband (90) ist, das mit seinem Außenende (92) mit dem Wischblatt (10) und mit seinem Innenende (94) vorzugsweise über eine gespannte Zugfeder (60) mit dem Wischerarm (50) verbunden ist.

4. Scheibenreinigungsvorrichtung nach einem der vorangegangenen Ansprüche,
**dadurch gekennzeichnet**,
daß der Wischerarm (50) an einer das Wischblatt (10) übergreifenden Schale (40) angelenkt (54) ist.

5. Scheibenreinigungsvorrichtiung nach Anspruch 4,
**dadurch gekennzeichnet**,
daß die Schalte (40) aus mehreren gelenkig aneinandergereihten Gliedern (42) gebildet ist.

6. Scheibenreinigungsvorrichtung nach Anspruch 5,
**dadurch gekennzeichnet**,
daß die Längenabmessung der Glieder (42) in Richtung auf das Außenende des Wischblatts (10) abnimmt.

7. Scheibenreinigungsvorrichtung nach einem der vorangegangenen Ansprüche,
**dadurch gekennzeichnet**,
daß mehrere Wischkantenpaare (11, 12; 21, 22; 31, 32) symmetrisch um den Umfang des Wischblatts (10) verteilt vorgesehen sind.

8. Scheibenreinigungsvorrichtung nach einem der vorangegangenen Ansprüche,
**dadurch gekennzeichnet**,
daß drei Wischkantenpaare (11, 12; 21, 22; 31, 32) an einem Wischblatt (10) vorgesehen sind, dessen Wischgummi (13) im Querschnitt im wesentlichen die Form eines gleichseitigen Dreiecks mit nach innengewölbten Seiten (14, 24, 34) und abgestumpften Ecken (15) hat, wobei die beiden Schnittpunkte zwischen jeweils einer nach innen gewölbten Dreiecksseite (14, 24, 34) und den jeweils daran angrenzenden abgestumpften Ecken (15) ein Wischkantenpaar aus jeweils zwei zusammenwirkenden Wischkanten definieren.

9. Scheibenreinigungsvorrichtung nach Anspruch 7 oder 8,
**dadurch gekennzeichnet**,
daß die das Wischblatt (10) übergreifende Schale (40) dem Querschnitssprofil des Wischgummis (13) angepaßt ist und alle nicht an der Scheibe (30) anliegenden Wischkanten (21, 22; 31, 32) überdeckt.

10. Scheibenreinigungsvorrichtung nach einem der Ansprüche 7 bis 9,
**dadurch gekennzeichnet**,
daß das Wischblatt (10) und die das Wischblatt übergreifende Schale (40) derart ausgebildet sind, daß das Wischblatt (10) leicht austauschbar und/oder um ein bestimmtes Ausmaß verdreht wieder einsetzbar ist.
